# EUROPEAN PATENT APPLICATION

(11) **EP 4 001 112 A1**
(43) Date of publication of application: **25.05.2022**
(21) Application number: 21209359.5
(22) Date of filing: 19.11.2021
(51) Int. Cl.: B64D 11/00

(54) **AIRCRAFT SIGN PROJECTION SYSTEM**

(30) Priority: 19.11.2020 US 202016953149
(71) Applicant: B/E Aerospace, Inc., Winston-Salem, NC 27105 (US)
(72) Inventor: FOSTER, Samuel, Milton Keynes, MK15 9AU (GB)
(74) Representative: Dehns

(57) **Abstract**

A system for projecting a graphical element (102) onto an interior surface of an aircraft cabin includes a first interior surface (104) of an aircraft, a projector (106) mounted to the first interior surface (104), the projector (106) configured to output the graphical element (102) onto a projection surface, and a controller configured to modify the graphical element (102) based on a user input, flight condition, or aircraft interior condition.

## Description

### Background

### Technological Field

The present disclosure relates to a light projection system, and more particularly to a projector system for an aircraft lighting projection system.

### Description of Related Art

A variety of devices are known in the providing lighting and signage in an aircraft or other large capacity vehicle. However, with the rise of airborne diseases lighting systems need be more adapt at these conditions, including being touch free and adapting to changing conditions on these vehicles. There is still a need in the art for lighting and signage systems in aircraft that are easily controlled and do not require touching by hand. There also remains a need in the art for such systems and components that are economically viable. The present disclosure may provide a solution for at least one of these remaining challenges.

### Summary of the Invention

A system for projecting a graphical element onto an interior surface of an aircraft cabin includes a first interior surface of an aircraft, a projector mounted to the first interior surface, the projector configured to output the graphical element onto a projection surface, and a controller configured to modify the graphical element based on a user input, flight condition, or aircraft interior condition.

The first surface can be an interior wall or interior ceiling. The projection surface can be a floor of an aircraft interior. The projection surface can include a plurality of surfaces, wherein at least one surfaces of the plurality of surfaces is not adjacent to another one of the plurality of surfaces.

The graphical element can include an indicia of instructions configured to change based on a flight status or based on a proximity of a passenger to a specific location. The graphical element can be configured to change based on a density of passengers within a preselected area of the aircraft interior. A sensor can be coupled to the projector configured to provide interior data to the controller.

An interface can be used manually control the graphical element. The interface can include a keyboard. The interface can include a microphone. The controller can be electronically coupled to an ambient lighting control of the aircraft. The controller can be coupled to sensor or mechanical control indicating a presence of a person or material, such as an airborne particle. The mechanical control is part of a bathroom door.

These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject invention appertains will readily understand how to make and use the devices and methods of the subject invention without undue experimentation, preferred embodiments thereof will be described in detail herein below with reference to certain figures, wherein:

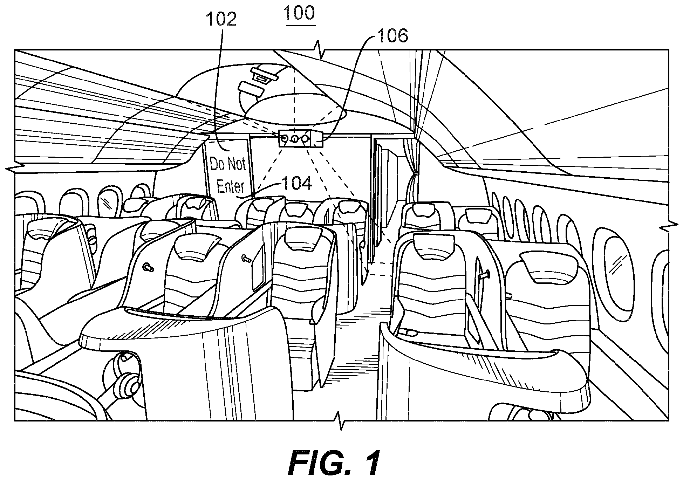

Fig. 1 is a perspective view of an aircraft interior.

### Detailed Description

Reference will now be made to the drawings wherein like reference numerals identify similar structural features or aspects of the subject invention. For purposes of explanation and illustration, and not limitation, a partial view of an exemplary embodiment of a lighting system in accordance with the invention is shown in Fig. 1 and is designated generally by reference character 100. The methods and systems of the invention can be used to project on demand images and to change lighting scenes based on flight situations.

Fig. 1 shows an interior of an aircraft 100. The interior includes a system for projecting a graphical element 102 onto an interior surface 104 of an aircraft. The graphical element 102 is projected by a projector 106 mounted inside the aircraft 100. A controller (not shown) is used to modify the graphical element 102 based on a user input, flight condition, or aircraft interior condition. The projector 106 can be mounted to a ceiling of the aircraft in the passenger area or can be mounted to a galley monument and project messages and indicators to the galley surfaces.

The projection can project images onto interior walls and ceilings. The projection can be placed on a plurality of surfaces. In certain instances, the surfaces are not touching each other and are not adjacent to each other. The graphical element or projection can include an indicia of instructions such as "TAKE YOUR SEAT" or "FASTEN YOUR SEAT BELTS" or a symbol thereof if a pilot directs passengers to their seats. In other instances the lighting can direct passengers to move away from a certain area or to disperse if a sensor detects that there are too many persons congregating in a particular area. A sensor can be coupled to the projector which provides interior data to the controller. Furthermore, the projector can be linked to the air management system of the aircraft. If the air management system detects an airborne virus or other harmful substance in the air, the lighting can be changed to direct passengers to put on masks or move away from an area where the substance is originating from.

An interface can be used to manually control the graphical element. A user can employ a keyboard or a microphone to project a required message on a floor or other surface of the aircraft. The surface can also be lavatory door, where instead of having a mechanical signage change when the lavatory is occupied; the projector emits an "OCCUPIED" or red light onto the door. This decreases the weight that is required in the lavatory doors and still allows multiple passengers to easily see if a bathroom is occupied of not.

The methods and systems of the present disclosure, as described above and shown in the drawings, provide for a lighting system with superior properties including increased flexifbility and reduced weight. While the apparatus and methods of the subject disclosure have been showing and described with reference to embodiments, those skilled in the art will readily appreciate that changes and/or modifications may be made thereto without departing from the spirit and score of the subject disclosure.

## Claims

1. A system for projecting a graphical element (102) onto an interior surface of an aircraft cabin comprising:
a first interior surface (104) of an aircraft;
a projector (106) mounted to the first interior surface, the projector configured to output the graphical element onto a projection surface; and
a controller configured to modify the graphical element based on a user input, flight condition, or aircraft interior condition.

2. The system of claim 1, wherein the first surface (104) is an interior wall or interior ceiling.

3. The system of claim 1, wherein the projection surface is a floor of an aircraft interior.

4. The system of claim 1, wherein the projection surface includes a plurality of surfaces.

5. The system of claim 4, wherein at least one surfaces of the plurality of surfaces is not adjacent to another one of the plurality of surfaces.

6. The system of claim 1, wherein the graphical element (102) includes an indicia of instructions.

7. The system of claim 6, wherein the indicia of instructions is configured to change based on a flight status.

8. The system of claim 1, wherein the graphical element (102) is configured to change based on a proximity of a passenger.

9. The system of claim 1, where the graphical element (102) is configured to change based on a density of passengers within a preselected area of the aircraft interior.

10. The system of claim 9, further comprising a sensor coupled to the projector configured to provide interior data to the controller.

11. The system of claim 1, further comprising an interface to manually control the graphical element.

12. The system of claim 11, wherein the interface includes a keyboard; and/or, wherein the interface includes a microphone.

13. The system of claim 1, wherein the controller is electrnically coupled to an ambient lighting control of the aircraft.

14. The system of claim 1, wherein the controller is coupled to sensor or mechanical control indicating a presence of a person or material.

15. The system of claim 15, wherein the mechanical control is part of a bathroom door; and/or
wherein the material includes an airborne particle.
